# EUROPEAN PATENT SPECIFICATION

(11) **EP 4 173 749 B1**
(45) Date of publication and mention of the grant of the patent: **12.03.2025**
(21) Application number: 21833793.9
(22) Date of filing: 25.06.2021
(51) Int. Cl.: B23K 26/00, B23K 26/21, B23K 26/03, B23K 26/06, B23K 31/12, B23K 26/082, B23K 26/22

(54) **LASER WELDING DEVICE AND LASER WELDING METHOD**
LASERSCHWEISSVORRICHTUNG UND LASERSCHWEISSVERFAHREN
DISPOSITIF DE SOUDAGE AU LASER ET PROCÉDÉ DE SOUDAGE AU LASER

(30) Priority: 29.06.2020 JP 2020111720
(43) Date of publication of application: 03.05.2023
(73) Proprietor: Panasonic Intellectual Property Management Co., Ltd., Osaka-shi, Osaka 540-6207 (JP)
(72) Inventor: WANG, Jingbo, Osaka-shi, Osaka 540-6207 (JP); SUGIYAMA, Tsutomu, Osaka-shi, Osaka 540-6207 (JP); KAWAI, Shunsuke, Osaka-shi, Osaka 540-6207 (JP); SHIBATA, Kenzo, Osaka-shi, Osaka 540-6207 (JP); ISHIGURO, Masashi, Osaka-shi, Osaka 540-6207 (JP)
(74) Representative: Novagraaf International SA
(86) International application number: PCT/JP2021/024223
(87) International publication number: WO 2022/004610

(56) References cited:
- JP-A- 2002 346 776
- JP-A- 2008 183 614
- JP-A- 2017 177 222
- JP-A- H0 747 471
- JP-A- H03 169 494
- JP-B2- 4 617 324
- RU-C2- 2 635 588

## Description

### TECHNICAL FIELD

The present disclosure relates to a laser welding device and a laser welding method (see, for example, JP 2002 346776 A).

### BACKGROUND ART

In laser welding, since a power density of laser light applied to a workpiece as an object to be welded is high, high-speed and high-quality welding can be performed. In particular, in scanning welding in which welding is performed while a surface of a workpiece is being scanned at a high speed with a laser beam, since the laser beam can be moved at a high speed to a next welding point during a period in which the welding is not performed, a total welding time can be shortened.

For example, Patent Literature 1 discloses a method of laser-welding two processing objects that are overlapped. In this method, a surface of a first processing object is irradiated with the laser beam in order to form a keyhole penetrating the entire processing objects in which the first processing object and the second processing object are overlapped. During irradiation of the laser beam, a scanning mirror that can be inclined in an X direction and a Y direction is incorporated in a laser head of the laser welding device, and the laser beam is reflected by the scanning mirror and emitted onto the surface of the processing object. Since the laser beam can be moved at a high speed by driving the scanning mirror, high-speed welding can be performed.

### CITATION LIST

### PATENT LITERATURE

Patent Literature 1: US2017/0239750A1

### SUMMARY OF INVENTION

### TECHNICAL PROBLEM

When a weld bead is formed on a processing object by laser welding, welding defects may occur due to various factors such as a variation in dimensions of the processing object to be welded, a variation in surface state of the processing object, and a variation in welding conditions. In particular, in the scanning-welding in which high-speed welding is performed, since the welding speed is high, even a slight variation may lead to generation of welding defects. In an actual production site, when an unacceptable welding defect in laser welding occurs, from the viewpoint of cost, a means for repairing and reusing the workpiece after the end of welding is taken instead of discarding the workpiece. Since the work is performed after the end of welding, time and labor for repair are required, and thus not only the total production efficiency is reduced, but also the production cost is increased.

However, the related-art configuration disclosed in Patent Literature 1 is effective in reducing welding defects that may occur during the welding as much as possible, but any countermeasures when unacceptable welding defects occur once is not disclosed.

The present disclosure has been made in view of the above, and an object of the present disclosure is to provide a laser welding device and a laser welding method in which when an unacceptable welding defect in laser welding is detected, measures for quickly and appropriately maintaining a welding strength of a welding portion where the welding defect is detected are taken.

### SOLUTION TO PROBLEM

The present disclosure provides a laser welding device including: a laser oscillator to which an incidence end of a fiber is connected; a welding head connected to an emission end of the fiber and configured to perform laser welding while condensing laser light emitted from the laser oscillator via the emission end and irradiating a workpiece with the laser light; a detection unit configured to detect presence or absence of a defect in the laser welding; and a controller configured to control operations of the laser oscillator and the welding head based on an output signal of the detection unit, in which when receiving, from the detection unit, an output signal indicating a defect at a welding point on the workpiece during the laser welding of the workpiece, the controller performs control such that supplementary laser welding is performed at a predetermined position in a vicinity of the welding point.

The present disclosure provides a laser welding method including: a step of performing laser welding while condensing laser light emitted from a laser oscillator, to which an incidence end of a fiber is connected, via an emission end of the fiber and irradiating a workpiece with the condensed laser light; a step of detecting a presence or absence of a defect in the laser welding; a step of controlling operations of the laser oscillator and a welding head based on an output signal of a detection unit; and a step of executing, when receiving an output signal indicating a defect at a welding point on the workpiece during the laser welding of the workpiece, a supplementary laser welding point at a predetermined position in a vicinity of the welding point.

### ADVANTAGEOUS EFFECTS OF INVENTION

According to the present disclosure, when an unacceptable welding defect in the laser welding is detected, measures for quickly and appropriately maintaining the welding strength of the welding portion at which the welding defect is detected can be taken.

### BRIEF DESCRIPTION OF DRAWINGS

FIG. 1 is a diagram showing a schematic configuration example of a laser welding device according to a first embodiment.
FIG. 2A is a diagram schematically showing a relationship between a focal position of laser light and a molten pool and a keyhole which are formed in a workpiece.
FIG. 2B is a diagram schematically showing a relationship between a focal position of the laser light and a molten pool and a keyhole which are formed in the workpiece.
FIG. 3 is a diagram showing an example of a table showing a correspondence relationship between the focal position of the laser light and a welding penetration depth of a workpiece.
FIG. 4 is a diagram schematically showing an example of arrangement positions of a first optical sensor, a second optical sensor, and a third optical sensor constituting a welding state detection mechanism.
FIG. 5A is a diagram showing an example of a distribution of sensor signal intensities obtained by the first optical sensor when laser welding is normal.
FIG. 5B is a diagram showing an example of a distribution of sensor signal intensities obtained by the first optical sensor when laser welding is abnormal.
FIG. 6A is a diagram showing an example of a distribution of sensor signal intensities obtained by the second optical sensor when laser welding is normal.
FIG. 6B is a diagram showing an example of a distribution of sensor signal intensities obtained by the second optical sensor when laser welding is abnormal.
FIG. 7A is a diagram showing an example of a distribution of sensor signal intensities obtained by the third optical sensor when laser welding is normal.
FIG. 7B is a diagram showing an example of a distribution of sensor signal intensities obtained by the third optical sensor when laser welding is abnormal.
FIG. 8 is a diagram schematically showing an example of the arrangement positions of the first optical sensor, the second optical sensor, and the third optical sensor constituting the welding state detection mechanism.
FIG. 9 is a diagram schematically showing an example of the arrangement positions of the first optical sensor, the second optical sensor, and the third optical sensor constituting the welding state detection mechanism.
FIG. 10 is a diagram schematically showing an example of the arrangement positions of the first optical sensor, the second optical sensor, and the third optical sensor constituting the welding state detection mechanism.
FIG. 11 is a diagram schematically showing an example of laser welding points and supplementary welding points according to the first embodiment.
FIG. 12 is a flowchart showing an example of an operation procedure of the laser welding device according to the first embodiment.

### DESCRIPTION OF EMBODIMENTS

### (Introduction to Present Disclosure)

In Patent Literature 1, it is not considered to detect a welding defect (welding failure) during laser welding at a welding target position (that is, a welding point). Therefore, for example, a welding inspection step for confirming the presence or absence of a welding defect after an entire laser welding on the workpiece is completed is required. When an unacceptable welding defect can be found in the welding inspection step, it is necessary to perform laser welding for correction (supplement) or other welding, for example, arc welding, on the corresponding welding point again. In other words, it is difficult to reduce a tact time of the entire laser welding including a time required for the laser welding to the corresponding welding point or the correction in other welding methods.

Therefore, in the following embodiment, an example of a laser welding device and a laser welding method will be described in which, when an unacceptable welding defect in the laser welding is detected, measures for quickly and appropriately maintaining the welding strength of a welding portion at which the welding defect is detected are taken.

Hereinafter, an embodiment specifically describing a laser welding device and a laser welding method according to the present disclosure will be described in detail with reference to the drawings as appropriate. An unnecessarily detailed description may be omitted. For example, detailed description of a well-known matter or repeated description of a substantially the same configuration may be omitted. This is to avoid unnecessary redundancy of the following description and to facilitate understanding of those skilled in the art. The accompanying drawings and the following description are provided in order for those skilled in the art to sufficiently understand the present disclosure, and are not intended to limit the subject matters described in the scope of claims.

### (Configuration of Laser Welding Device)

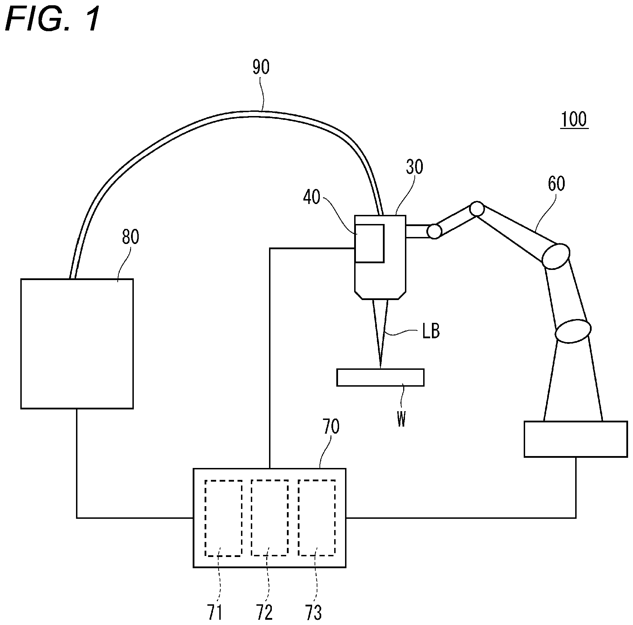

FIG. 1 is a diagram showing a schematic configuration example of a laser welding device 100 according to a first embodiment. The laser welding device 100 includes a laser oscillator 80, a controller 70, an optical fiber 90, a welding head 30, a welding state detection mechanism 40, and a manipulator 60.

The laser oscillator 80 is a laser source which generates laser light LB by being supplied with power from a power supply (not shown). The laser oscillator 80 may be implemented by a single laser source or may include a plurality of laser modules. In the latter case, the laser oscillator 80 combines laser light emitted from the plurality of laser modules and emits the combined laser light as the laser light LB.

The laser source or the laser module used in the laser oscillator 80 is appropriately selected according to a material of a workpiece W, which is an object to be welded, a shape of a welding portion, or the like. For example, a fiber laser, a disk laser, or a YAG (Yttrium Aluminum Garnet) laser may be used as the laser source. In this case, a wavelength of the laser light LB is set in a range from 1000 nm to 1100 nm. A semiconductor laser may be used as the laser source or the laser module. In this case, a wavelength of the laser light LB is set in a range from 800 nm to 1000 nm. Further, a visible laser may be used as the laser source or the laser module. In this case, a wavelength of the laser light LB is set in a range from 400 nm to 800 nm.

In the optical fiber 90 as an example of the fiber, one end (incidence end) is optically coupled to the laser oscillator 80, the other end (emission end) is optically coupled to the welding head 30, and the optical fiber 90 has a core (not shown) at a center of an axis thereof, and a first cladding (not shown) is provided coaxially with the core in contact with an outer peripheral surface of the core. The core and the first cladding each contain quartz as a main component, and a refractive index of the core is higher than a refractive index of the first cladding. Therefore, the laser light LB generated by the laser oscillator 80 is incident on the incidence end of the optical fiber 90, and is transmitted toward the emission end (see the above description) inside the core. A film or a resin-based protective layer (both not shown) for mechanically protecting the optical fiber 90 is provided on an outer peripheral surface of the first cladding.

The welding head 30 is attached to the emission end of the optical fiber 90, the laser beam transmitted and spread through the optical fiber 90 is collimated once into a parallel beam, and then the collimated parallel beam is condensed and emitted to the workpiece W as the laser light LB. As a result, the workpiece W is laser-welded.

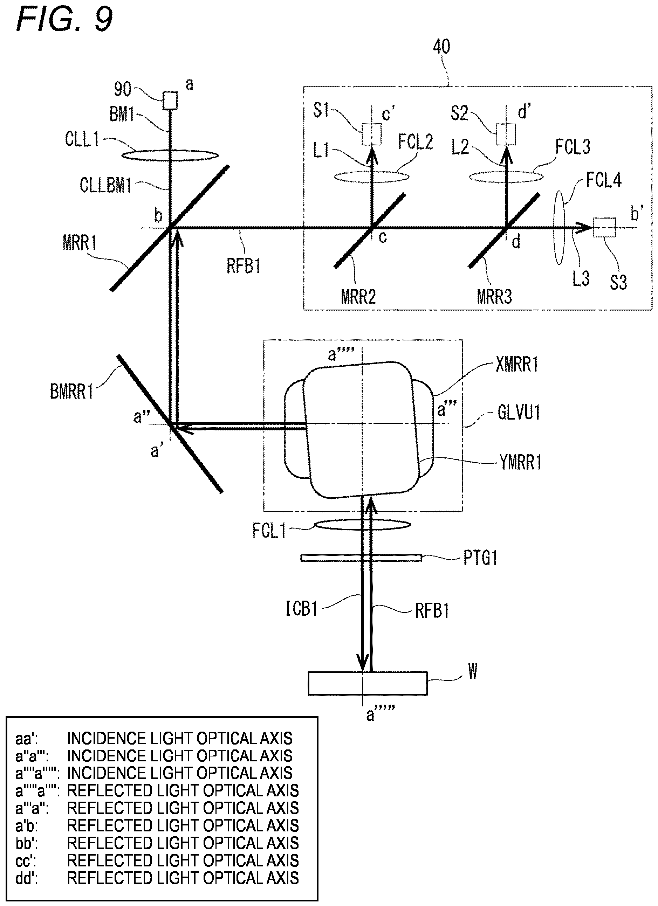

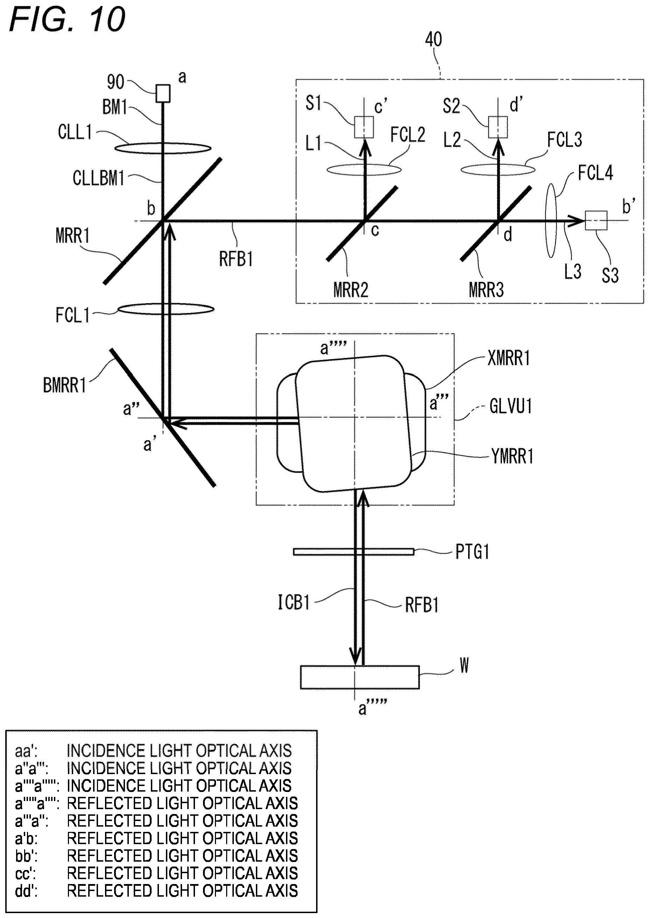

Further, the welding head 30 may be configured to two-dimensionally scan the workpiece W with the laser light LB while emitting the laser light LB toward the workpiece W. In this case, an optical scanning mechanism (for example, refer to FIG. 9 or 10) that performs the scanning with the laser light LB is provided. The optical scanning mechanism is not limited to configurations shown in FIGS. 9 and 10. Further, the welding head 30 may include a focal position adjustment mechanism (not shown) for intentionally changing a focal position of the laser light LB emitted toward the workpiece W. Details and functions of the configuration of the welding head 30 will be described later.

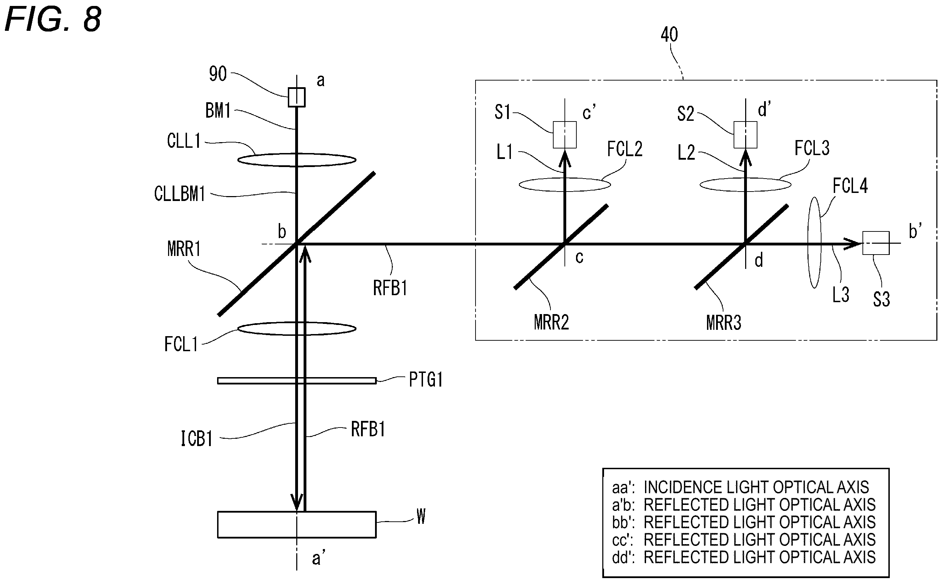

The welding state detection mechanism 40 as an example of a detection unit detects the presence or absence of a welding defect (welding failure) of laser welding that is performed by the welding head 30 on a welding point (see FIGS. 8 to 10) of the workpiece W. The welding state detection mechanism 40 generates an output signal indicating a detection result of the presence or absence of a welding defect of the laser welding, and sends the output signal to the controller 70. Details will be described later, and the welding state detection mechanism 40 of the first embodiment includes a plurality of (for example, three types of) different sensors and a processor (not shown). The sensors are, for example, a first optical sensor S1, a second optical sensor S2, and a third optical sensor S3. Details of operations of these sensors will be described later. The processor (not shown) detects, based on the output of each sensor, the presence or absence of a welding defect (welding failure) of the laser welding that is performed by the welding head 30 on the welding point (see FIGS. 8 to 10) of the workpiece W.

In the welding state detection mechanism 40, the configuration of the processor (not shown) may be omitted, and in this case, the control unit 71 of the controller 70 may determine the presence or absence of a welding defect (welding failure) of the laser welding that is performed by the welding head 30 on the welding point (see FIGS. 8 to 10) of the workpiece W.

The controller 70 includes a control unit 71, a storage unit 72, and a display unit 73. The controller 70 controls laser oscillation of the laser oscillator 80. Specifically, the controller 70 controls the laser oscillation and laser output by supplying control signals such as an output current and an on/off time to a power supply (not shown) connected to the laser oscillator 80. Further, according to contents of a selected laser welding program, the controller 70 performs, through a driver (not shown), drive control on the optical scanning mechanism (not shown) and the focal position adjustment mechanism (not shown) that are provided in the welding head 30. The controller 70 controls an operation of the manipulator 60.

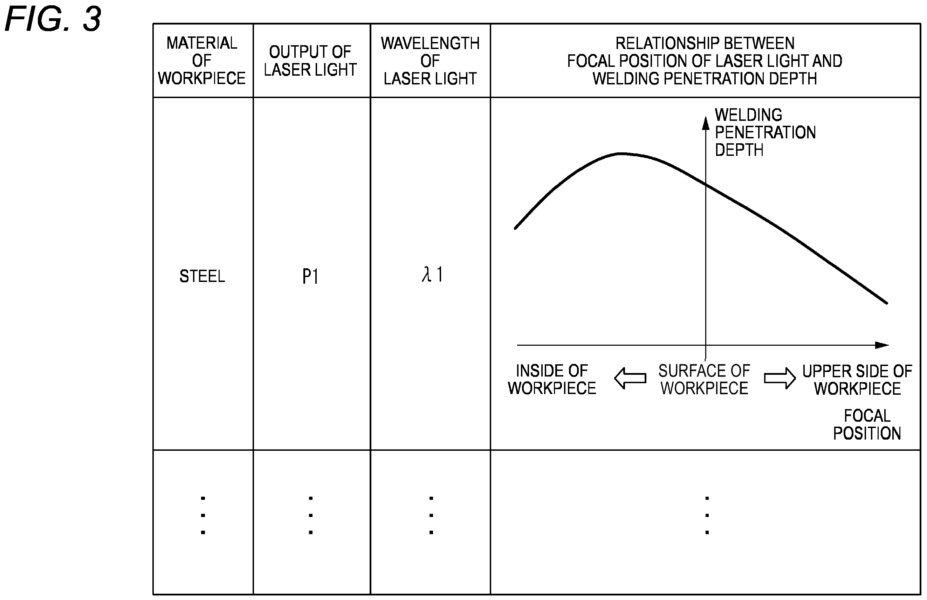

The storage unit 72 store a laser welding program. The storage unit 72 may be provided inside the controller 70 as shown in FIG. 1, or may be provided outside the controller 70 and configured to exchange data with the controller 70. Although details will be described later, the storage unit 72 stores data in which the focal position of the laser light LB and the welding penetration depth of the workpiece W are associated with the material of the workpiece W (see FIG. 3).

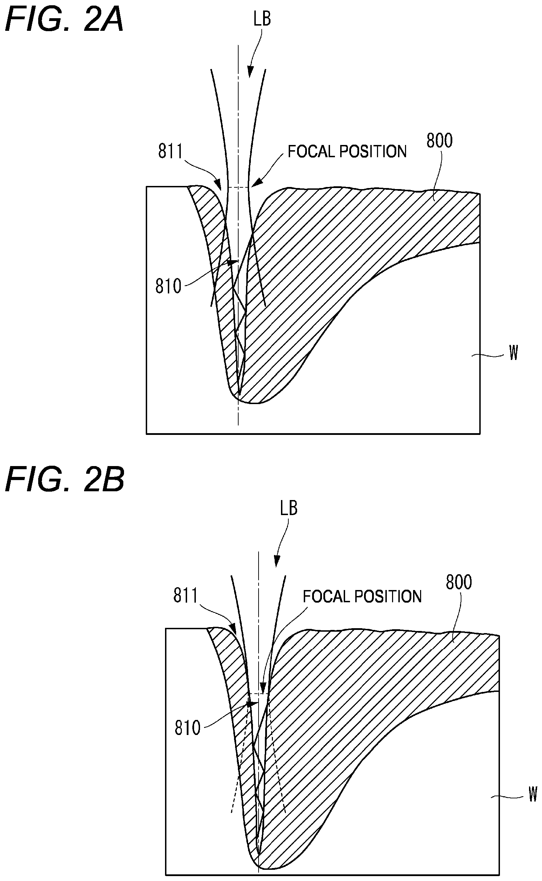

FIGS. 2A and 2B are diagrams schematically showing a relationship between the focal position of the laser light and a molten pool and a keyhole which are formed in the workpiece W. FIG. 3 is a diagram illustrating an example of a table indicating a correspondence relationship between the focal position of the laser light LB and the welding penetration depth of the workpiece W. FIG. 2A shows a case in which the focal point of the laser light LB is located in the vicinity of a surface of the workpiece W. FIG. 2B shows a case where the focal point of the laser light LB is located inside the workpiece W. When the laser welding is performed, in order to obtain a stable welding result, the setting of the focal position with respect to the workpiece W often follows FIG. 2.

In general, when the workpiece W made of metal is laser-welded, as shown in FIG. 2A, a portion irradiated with the laser light LB is heated and melted, and a molten pool 800 is formed. In addition, in the portion irradiated with the laser light LB, a material constituting the molten pool 800 is rapidly evaporated, and a keyhole 810 is formed inside the molten pool 800 due to a reaction force.

When the keyhole 810 is formed, most of the laser light LB enters an inside of the keyhole 810 while being reflected a plurality of times by an inner wall surface of the keyhole 810, and is absorbed by the molten pool 800. By repeating the reflection on the inner wall surface of the keyhole 810, an absorption rate at which the laser light LB is absorbed by the molten pool 800 is improved, an amount of heat input to the workpiece W is increased, and the welding penetration depth is increased. Further, although being a small amount of laser light LB and varying depending on the material of the workpiece W or welding conditions (varying depending on the material, the welding conditions, and the like, and is usually 10% or less), a part of the laser light LB is reflected by a keyhole wall in the vicinity of an entrance of the keyhole 810, and the reflected laser light LB is reflected outside the keyhole 810 without entering the keyhole 810 and becomes a loss.

Further, since the keyhole 810 is an open space extending from an opening 811 of the keyhole 810 formed on a surface of the molten pool 800 toward the inside of the molten pool 800, as shown in FIG. 2B, when the focal position of the laser light LB is moved to the inside from the surface of the workpiece W, specifically, the inside of the keyhole 810, a power density of the laser light LB emitted to the inner wall surface of the keyhole 810 increases, a light amount of light absorbed by the molten pool 800 increases, and the welding penetration depth increases as compared with the case shown in FIG. 2A. Further, in a case of making the focal position of the laser light LB reach the inside of the keyhole 810, the opening 811 of the keyhole 810 is expanded as compared with the case shown in FIG. 2A, so that the laser light LB more easily reaches the inside of the keyhole 810. When the focal position of the laser light LB is moved inside the workpiece W from the surface thereof, since the laser light LB is converged in the vicinity of the opening 811 of the keyhole 810 and enters the inside of the keyhole 810, the laser light LB is less likely to be reflected by the keyhole wall in the vicinity of the entrance of the keyhole 810, and the light amount absorbed by the molten pool 800 increases, which also leads to an increase in the welding penetration depth.

With the surface of the workpiece W as a reference, the welding penetration depth of the workpiece W reduces as the focal position of the laser light LB moves upward, that is, toward an outside of the workpiece W. On the other hand, with the surface of the workpiece W as a reference, the welding penetration depth of the workpiece W increases as the focal position of the laser light LB moves downward, that is, to a predetermined position inside the workpiece W. When the focal position of the laser light LB moves deeper inside the workpiece W than the predetermined position, the power density of the laser light LB on the surface of the workpiece W decreases, and the amount of heat input to the workpiece W at an initial stage of forming the molten pool 800 decreases. Therefore, the welding penetration depth reduces.

Accordingly, in order to make the laser light LB reach the inside of the keyhole 810, the focal position of the laser light LB is moved from the surface of the workpiece W to a predetermined position inside the workpiece W, and thus the welding penetration depth of the workpiece W can be increased.

A shape of a curve shown in FIG. 3 changes depending on the material of the workpiece W and an output of the laser light LB. Therefore, in the storage unit 72, the welding penetration depth of the workpiece W with respect to the focal position of the laser light LB is stored as data in a table format in association with the material of the workpiece W, the output of the laser light LB, and the wavelength of the laser light LB. In order to make the description of FIG. 3 easy to understand, the change of the welding penetration depth of the workpiece W with respect to the focal position of the laser light LB is shown in a graph format, but in practice, each plot of the curve shown in FIG. 3 is associated with the material of the workpiece W or the like in a data format.

When the workpiece W is laser-welded, the focal position of the laser light LB is changed based on a shape of the welding portion of the workpiece W and the data shown in FIG. 3, thus the laser welding can be appropriately performed according to the shape of the welding portion, and the joining strength of the workpiece W can be secured.

The control unit 71 controls an output intensity (power density) of the laser light LB of the laser oscillator 80 according to the laser welding program stored in the storage unit 72. The control unit 71 transmits a position command to a servo motor (not shown) provided in the manipulator 60 according to the laser welding program stored in the storage unit 72 and a feedback signal from an encoder (not shown) provided in the manipulator 60, and controls a rotation speed and a rotation amount of the servo motor (not shown).

The control unit 71 controls operations of the laser oscillator 80 and the welding head 30 based on an output signal (to be described later) obtained from the welding state detection mechanism 40. Details of operations of the control unit 71 will be described later.

The display unit 73 displays an output state of the laser oscillator 80, an operation state of the manipulator 60, a warning, and the like under the control of the control unit 71.

The manipulator 60 has a configuration in which the servo motor (not shown) and the encoder (not shown) are provided for each joint shaft (for example, four joint shafts are provided in FIG. 1, but six shafts are often provided in the case of laser welding). The manipulator 60 is connected to the controller 70, and moves the welding head 30 so as to draw a predetermined trajectory according to the laser welding program described above by operating the servo motor and the encoder for each joint shaft.

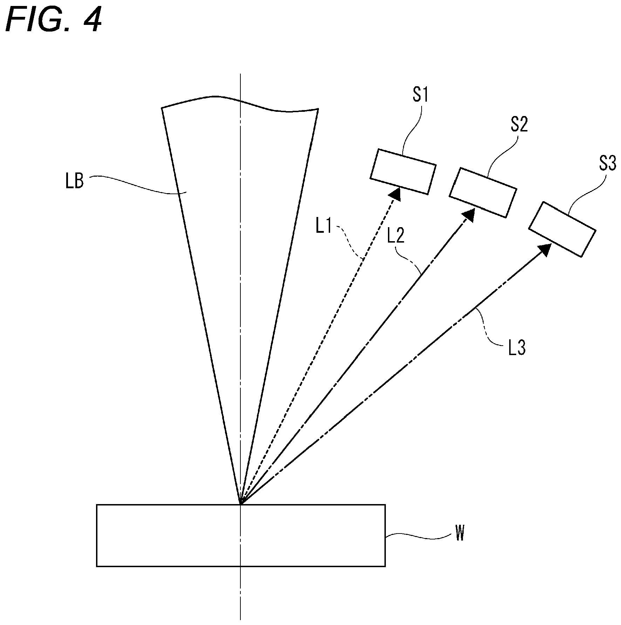

FIG. 4 is a diagram schematically showing an example of arrangement positions of the first optical sensor S1, the second optical sensor S2, and the third optical sensor S3 constituting the welding state detection mechanism 40. As shown in FIG. 4, the first optical sensor S1, the second optical sensor S2, and the third optical sensor S3 constituting the welding state detection mechanism 40 may be appropriately disposed on a lateral side (side surface) of the welding head 30 so as not to be coaxial with the laser light LB (in other words, laser beam) emitted to the workpiece W. In other words, the first optical sensor S1, the second optical sensor S2, and the third optical sensor S3 move in conjunction with the movement of the welding head 30. When the welding head 30 has a substantially cylindrical housing or a cylindrical housing, the first optical sensor S1, the second optical sensor S2, and the third optical sensor S3 may be appropriately disposed along the housing of the welding head 30.

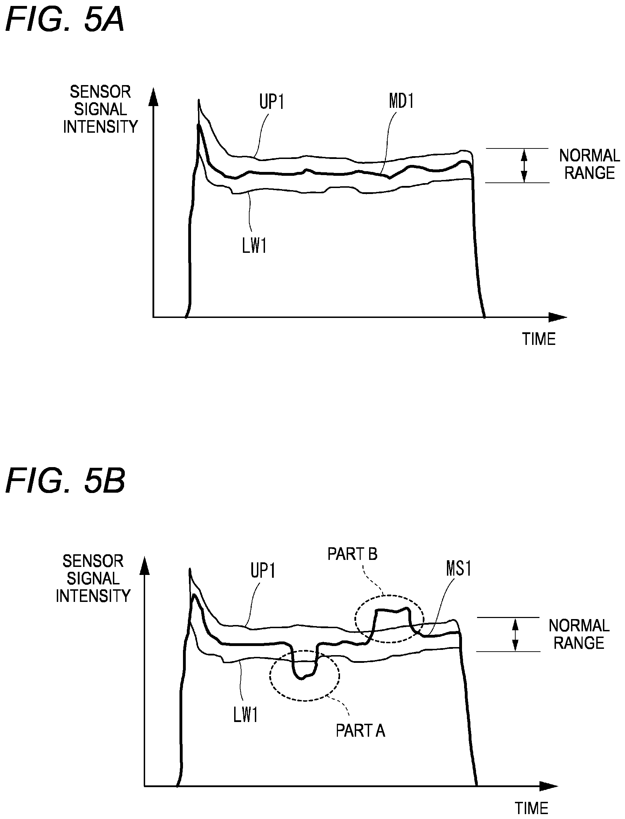

Although details will be described later with reference to FIGS. 5A and 5B, the first optical sensor S1 detects a light amount (an example of a sensor signal intensity) of specific wavelength light reflected from the welding point of the workpiece W when the workpiece W is irradiated with the laser light LB from the welding head 30 (that is, laser welding). The specific wavelength light has the same wavelength as the laser light LB (in other words, laser beam) emitted to the workpiece W. Hereinafter, the specific wavelength light is referred to as reflected light L1.

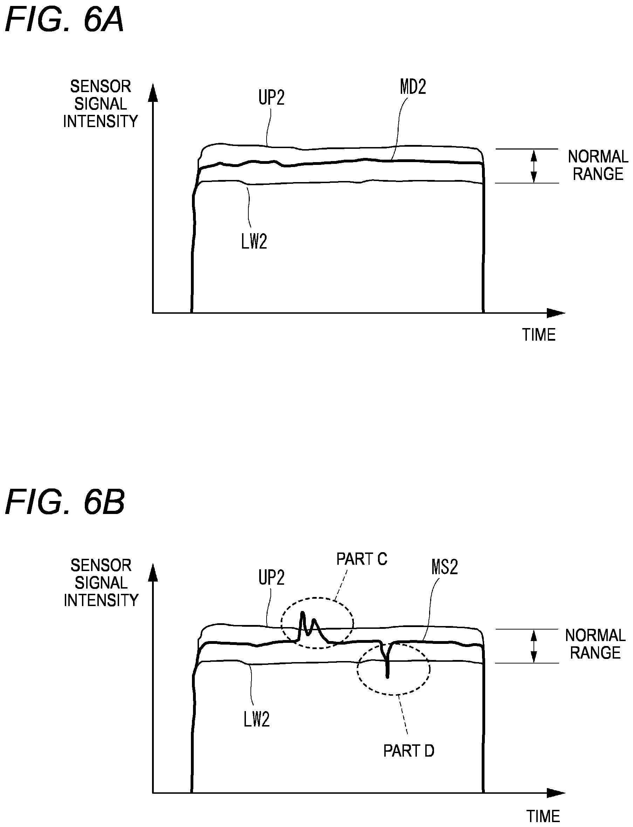

Although details will be described later with reference to FIGS. 6A and 6B, the second optical sensor S2 detects a light amount (an example of the sensor signal intensity) of plasma emission light L2 (for example, light having a wavelength in a visible light region) generated by irradiating the workpiece W with the laser light LB from the welding head 30 (that is, laser welding).

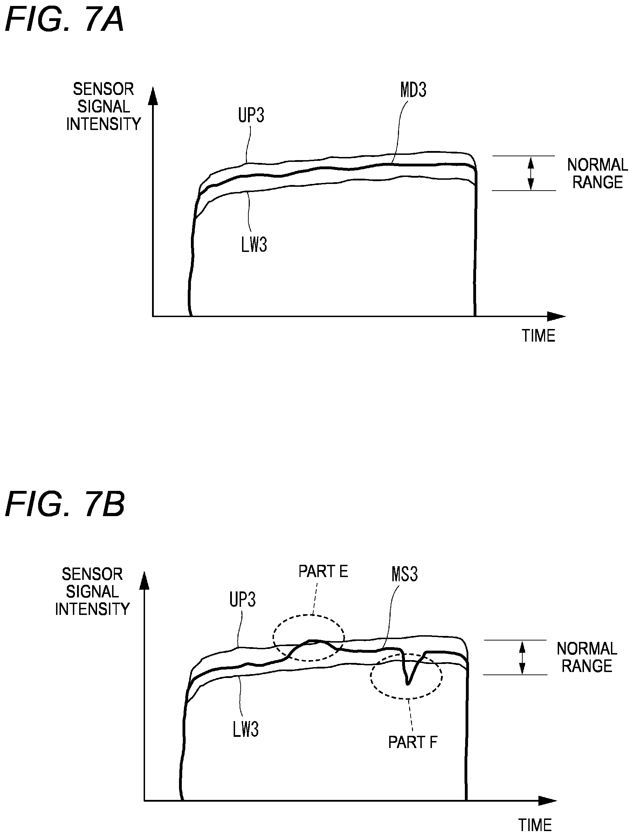

Although details will be described later with reference to FIGS. 7A and 7B, the third optical sensor S3 detects a light amount (an example of the sensor signal intensity) of radiated light generated by a temperature rise at the welding point of the workpiece W when the workpiece W is irradiated with the laser light LB from the welding head 30 (that is, laser welding), particularly, near-infrared light L3 (light having a wavelength of 800 nm or more, for example).

FIG. 5A is a diagram showing an example of a distribution of sensor signal intensities obtained by the first optical sensor S1 when laser welding is normal. FIG. 5B is a diagram showing an example of a distribution of sensor signal intensities obtained by the first optical sensor S1 when laser welding is abnormal. In FIGS. 5A and 5B, a horizontal axis represents time, and a vertical axis represents the sensor signal intensity (that is, the light amount of the reflected light L1 (see the above description) detected by the first optical sensor S1). The first optical sensor S1 detects the reflected light L1 generated from the welding point in the laser welding.

FIG. 5A shows a distribution characteristic (for example, a center curve MD1) of the light amount detected by the first optical sensor S1 when normal laser welding is performed from a start time point to an end time point of the laser welding, and shows that the sensor signal intensities have values in a normal range from a lower limit curve LW1 to an upper limit curve UP1. The workpiece W is a metal, and is in a solid state until the workpiece W starts to melt at the start time point of the laser welding. Therefore, at the start time point of the laser welding, reflectivity of the workpiece W tends to be high, and the sensor signal intensity tends to be relatively high. As the workpiece W begins to melt, the keyhole is formed and the reflectivity from the welding point gradually decreases, so that the sensor signal intensity gradually decreases from the initial high value and remains stable.

However, as shown in FIG. 5B, when the normal laser welding is not performed at any timing from the start time point to the end time point of the laser welding, a distribution characteristic MS1 of the light amount detected by the first optical sensor S1 has a value deviated from a range from the lower limit curve LW1 to the upper limit curve UP1 which is the normal range, such as a part A and a part B. When a characteristic of at least one of the part A and the part B is detected, the welding state detection mechanism 40 detects a welding defect (welding failure) of the corresponding welding point as a detection result of the first optical sensor S1.

For example, at the part A, the sensor signal intensity is further decreased form the lower limit curve LW1. This is considered to be because, for example, a variation in laser power or an individual variation in the workpiece W causes a variation in the molten pool in laser welding of a thin plate, and a hole is finally formed in the workpiece W, so that the sensor signal intensity of the reflected light L1 at the welding point is decreased from the lower limit curve LW1. Further, in lap welding of thin plates, the gap between an upper plate and a lower plate is too wide and the molten pool also increases, so that the reflected light L1 may decrease.

For example, at the part B, the sensor signal intensity is further increased from the upper limit curve UP1. This is considered to be because an amount of melting of the workpiece W is not sufficient due to a variation of the laser power in the laser welding, so that the sensor signal intensity of the reflected light L1 at the welding point is increased form the upper limit curve UP1.

FIG. 6A is a diagram showing an example of a distribution of sensor signal intensities obtained by the second optical sensor S2 when laser welding is normal. FIG. 6B is a diagram showing an example of a distribution of sensor signal intensities obtained by the second optical sensor S2 when laser welding is abnormal. In FIGS. 6A and 6B, a horizontal axis represents time, and a vertical axis represents a sensor signal intensity (that is, the light amount of the plasma emission light L2 (see the above description) detected by the second optical sensor S2). The second optical sensor S2 detects the plasma emission light L2 generated from the welding point in the laser welding.

FIG. 6A shows a distribution characteristic (for example, a center curve MD2) of the light amount detected by the second optical sensor S2 when normal laser welding is performed from a start time point to an end time point of the laser welding, and shows that the sensor signal intensities have values in a normal range from a lower limit curve LW2 to an upper limit curve UP2. The plasma emission light L2 transitions substantially stably from the start time point to the end time point of the laser welding.

However, as shown in FIG. 6B, when the normal laser welding is not performed at any timing from the start time point to the end time point of the laser welding, a distribution characteristic MS2 of the light amount detected by the second optical sensor S2 has a value deviated from a range from the lower limit curve LW2 to the upper limit curve UP2 which is the normal range, such as a part C and a part D. When a characteristic of at least one of the part C and the part D is detected, the welding state detection mechanism 40 detects a welding defect (welding failure) of the corresponding welding point as a detection result of the second optical sensor S2.

For example, at the part C, the sensor signal intensity is further increased from the upper limit curve UP2. This is considered to be because a phenomenon occurs in which the workpiece W is melted by a large amount and spatter is generated due to a variation in laser power of the laser welding or an individual variation of the workpiece W, a light amount of the plasma emission light at the welding point is temporarily increased from the upper limit curve UP2. Even if there is no variation in the laser power, when the keyhole greatly fluctuates due to the variation in the molten pool, large plasma emission light may be accompanied.

For example, at the part D, the sensor signal intensity is further decreased from the lower limit curve LW2. This is considered to be because, similarly to the part A (see FIG. 5B), for example, a hole is formed in the workpiece W due to a variation in molten pool during the laser welding, or a stable molten pool cannot be formed due to an excessively large gap, so that a light amount of the plasma emission light at the welding point is decreased from the lower limit curve LW2.

FIG. 7A is a diagram showing an example of a distribution of sensor signal intensities obtained by the third optical sensor S3 when laser welding is normal. FIG. 7B is a diagram showing an example of a distribution of sensor signal intensities obtained by the third optical sensor S3 when laser welding is abnormal. In FIGS. 7A and 7B, a horizontal axis represents time, and a vertical axis represents the sensor signal intensity (that is, the light amount of the near-infrared light L3 (see the above description) detected by the third optical sensor S3). The third optical sensor S3 detects the near-infrared light L3 generated from the welding point and having a strong relationship with a temperature of the molten pool during the laser welding.

FIG. 7A shows a distribution characteristic (for example, a center curve MD3) of the light amount detected by the third optical sensor S3 when the normal laser welding is performed from a start time point to an end time point of the laser welding, and shows that the sensor signal intensities have values in a normal range from a lower limit curve LW3 to an upper limit curve UP3. The workpiece W is a metal, and is in a solid state until the workpiece W starts to melt at the start time point of the laser welding. Therefore, since a temperature of the workpiece W is low at the start time point of the laser welding, a temperature of the molten pool is also relatively low, and the sensor signal intensity tends to be relatively low. As the workpiece W begins to melt, the temperature of the workpiece W gradually increases and becomes stable, so that the near-infrared light L3 gradually increases toward the end time point of the laser welding. As shown in FIG. 7A, an intensity of the near-infrared light L3 increases gradually toward the welding end point, but depending on a combination of the workpiece W and the welding conditions, the intensity of the near-infrared light L3 may be substantially constant up to the welding end point.

However, as shown in FIG. 7B, when the normal laser welding is not performed at any timing from the start time point to the end time point of the laser welding, the distribution characteristic MS3 of the light amount detected by the third optical sensor S3 has a value deviated from the normal range such as a part E and a part F. When a characteristic of at least one of the part E and the part F is detected, the welding state detection mechanism 40 detects a welding defect (welding failure) of the corresponding welding point as a detection result of the third optical sensor S3.

For example, at the part E, the sensor signal intensity is further increased from the upper limit curve UP3. This is considered to be because, similarly to FIG. 6A, a phenomenon occurs in which the workpiece W is melted by a large amount due to a variation in laser output during the laser welding or an individual variation of the workpiece W, the near-infrared light (in other words, the temperature) at the welding point temporarily is increased from the upper limit curve UP3.

For example, at the part F, the sensor signal intensity is further decreased from the lower limit curve LW3. This is considered to be because, similarly to FIG. 6B, for example, a hole is formed in the workpiece W during the laser welding or a gap is large and the molten pool is deeply recessed, a light amount of the near-infrared light at the welding point is decreased from the lower limit curve LW3.

Next, an internal configuration example of the welding head 30 incorporating the first optical sensor S1, the second optical sensor S2, and the third optical sensor S3 will be described with reference to FIGS. 8, 9, and 10.

FIG. 8 is a diagram schematically showing a second example of the arrangement positions of the first optical sensor S1, the second optical sensor S2, and the third optical sensor S3 constituting the welding state detection mechanism 40. In FIG. 8, the first optical sensor S1, the second optical sensor S2, and the third optical sensor S3 are all incorporated in the welding head 30. The welding head 30 is connected to the emission end of the optical fiber 90. Inside the welding head 30 shown in FIG. 8, a collimating lens CLL1, a first mirror MRR1, a condenser lens FCL1, a protective glass PTG1, a second mirror MRR2, a condenser lens FCL2, the first optical sensor S1, a third mirror MRR3, a condenser lens FCL3, the second optical sensor S2, a condenser lens FCL4, and the third optical sensor S3 are disposed.

The collimating lens CLL1, the first mirror MRR1, the condenser lens FCL1, and the protective glass PTG1 are disposed on an incidence light optical axis aa'. The first mirror MRR1, the condenser lens FCL1, and the protective glass PTG1 are also disposed on a reflected light optical axis a'b. The first mirror MRR1, the second mirror MRR2, the third mirror MRR3, and the condenser lens FCL4 are disposed on a reflected light optical axis bb'. The second mirror MRR2, the condenser lens FCL2, and the first optical sensor S1 are disposed on a reflected light optical axis cc'. c is located on the reflected light optical axis bb'. The third mirror MRR3, the condenser lens FCL3, and the second optical sensor S2 are disposed on a reflected light optical axis dd'. d is located on the reflected light optical axis bb'.

Specifically, the laser light LB (that is, an emission beam BM1) incident on the welding head 30 from the emission end of the optical fiber 90 travels along the incidence light optical axis aa', and is formed into a collimated beam CLLBM1 parallel to the incidence light optical axis aa' via the collimating lens CLL1. The collimated beam CLLBM1 passes through the first mirror MRR1 along the incidence light optical axis aa' and is condensed by the condenser lens FCL1. A condensed incidence beam ICB1 is emitted to the welding point of the workpiece W along the incidence light optical axis aa' via the protective glass PTG1. The first mirror MRR1 is coated in advance to transmit light in a direction of the incidence light optical axis aa' and to reflect light in a direction of the reflected light optical axis a'b clockwise by about 90 degrees in the figure.

The light including various wavelength bands (for example, the reflected light L1, the plasma emission light L2, and the near-infrared light L3) generated from the welding point of the workpiece W travels along the reflected light optical axis a'b as a reflected beam RFB1, passes through the protective glass PTG1 and the condenser lens FCL1, and is reflected by the first mirror MRR1.

After the reflection, the reflected beam RFB1 travels along the reflected light optical axis bb'. The reflected light L1 in the reflected beam RFB1 is reflected by the second mirror MRR2, and the remaining wavelength band light (specifically, the plasma emission light L2 and the near-infrared light L3) is transmitted through the second mirror MRR2. The second mirror MRR2 is coated in advance to reflect the reflected light L1 and to transmit the remaining wavelength band light (specifically, the plasma emission light L2 and the near-infrared light L3). The reflected light L1 travels along the reflected light optical axis cc', is condensed via the condenser lens FCL2, is received by the first optical sensor S1, and the light amount thereof is detected as the sensor signal intensity (see FIG. 5A or 5B).

In the plasma emission light L2 and the near-infrared light L3 transmitted through the second mirror MRR2, the plasma emission light L2 is reflected by the third mirror MRR3, and the remaining wavelength band light (specifically, the near-infrared light L3) is transmitted through the third mirror MRR3. The third mirror MRR3 is coated in advance to reflect the plasma emission light L2 and transmit the remaining wavelength band light (specifically, the near-infrared light L3). The plasma emission light L2 travels along the reflected light optical axis dd', is condensed via the condenser lens FCL3, is received by the second optical sensor S2, and the light amount thereof is detected as the sensor signal intensity (see FIG. 6A or FIG. 6B).

The near-infrared light L3 transmitted through the third mirror MRR3 is condensed via the condenser lens FCL4 and received by the third optical sensor S3, and the light amount thereof is detected as the sensor signal intensity (see FIG. 7A or 7B).

FIG. 9 is a diagram schematically showing a third example of the arrangement positions of the first optical sensor S1, the second optical sensor S2, and the third optical sensor S3 constituting the welding state detection mechanism 40. In FIG. 9, as in FIG. 8, the first optical sensor S1, the second optical sensor S2, and the third optical sensor S3 are all incorporated in the welding head 30. In the description of FIG. 9, the same elements as those in FIG. 8 are denoted by the same reference numerals, the description thereof will be simplified or omitted, and different contents will be described.

Inside the welding head 30 shown in FIG. 9, the collimating lens CLL1, the first mirror MRR1, a bend mirror BMRR1, a galvano scanner mechanism GLVU1, the condenser lens FCL1, the protective glass PTG1, the second mirror MRR2, the condenser lens FCL2, the first optical sensor S1, the third mirror MRR3, the condenser lens FCL3, the second optical sensor S2, the condenser lens FCL4, and the third optical sensor S3 are disposed. A configuration of the welding state detection mechanism 40 shown in FIG. 9 is the same as the configuration of the welding state detection mechanism 40 shown in FIG. 8, and thus the description thereof will be omitted.

FIG. 9 is different from FIG. 8 in that the galvano scanner mechanism GLVU1 is employed in FIG. 9. The galvano scanner mechanism GLVU1 includes an X-axis mirror XMRR1 that is driven in an X-axis direction that defines any one of XY planes parallel to the surface of the workpiece W, a Y-axis mirror YMRR1 that is driven in a Y-axis direction that defines any one of the XY planes parallel to the surface of the workpiece W, and a control driver (not shown) that controls the X-axis mirror XMRR1 and the Y-axis mirror YMRR1. The galvano scanner mechanism GLVU1 controls the X-axis mirror XMRR1 and the Y-axis mirror YMRR1 to emit the light incident on the galvano scanner mechanism GLVU1 (specifically, the collimated beam CLLBM1 reflected by the bend mirror BMRR1) to the welding point of the workpiece W as the incidence beam ICB1.

The collimating lens CLL1, the first mirror MRR1, and the bend mirror BMRR1 are disposed on the incidence light optical axis aa'. The galvano scanner mechanism GLVU1 is disposed on an incidence light optical axis a"a"'. The galvano scanner mechanism GLVU1, the condenser lens FCL1, and the protective glass PTG1 are disposed on an incidence light optical axis aʺʺa‴ʺ. The bend mirror BMRR1 and the first mirror MRR1 are also disposed on the reflected light optical axis a'b. Since the elements disposed on the reflected light optical axis bb', the reflected light optical axis cc', and the reflected light optical axis dd' are the same as those in FIG. 8, detailed description thereof will be omitted. Therefore, according to the example shown in FIG. 9, the condenser lens FCL1 is disposed at a position close to the surface of the workpiece W, and the galvano scanner mechanism GLVU1 is employed, so that the irradiation position of the laser beam on the workpiece W can be freely controlled.

Specifically, the laser light LB (that is, the emission beam BM1) incident on the welding head 30 from the emission end of the optical fiber 90 travels along the incidence light optical axis aa', and is formed into the collimated beam CLLBM1 parallel to the incidence light optical axis aa' via the collimating lens CLL1. The collimated beam CLLBM1 passes through the first mirror MRR1 along the incidence light optical axis aa' and is reflected by the bend mirror BMRR1. The collimated beam CLLBM1 reflected by the bend mirror BMRR1 is incident on the galvano scanner mechanism GLVU1 along the incidence light optical axis a"a"'. The collimated beam CLLBM1 is appropriately reflected by the X-axis mirror XMRR1 and the Y-axis mirror YMRR1 of the galvano scanner mechanism GLVU1, and the collimated beam CLLBM1 is emitted to the welding point of the workpiece W along the incidence light optical axis aʺʺa‴ʺ via the condenser lens FCL1 and the protective glass PTG1. The bend mirror BMRR1 is coated in advance to reflect the light in the direction of the incidence light optical axis aa' counterclockwise by 90 degrees in the figure and to reflect light in a direction of the incidence light optical axis a"a‴ clockwise by 90 degrees.

The light including various wavelength bands (for example, the reflected light L1, the plasma emission light L2, and the near-infrared light L3) generated from the welding point of the workpiece W travels along the incidence light optical axis aʺʺa‴ʺ as the reflected beam RFB1, passes through the protective glass PTG1 and the condenser lens FCL1, and is reflected by the galvano scanner mechanism GLVU1.

After the reflection, the reflected beam RFB1 travels along the reflected light optical axis a‴a", and is reflected by the bend mirror BMRR1. After the reflection, the reflected beam RFB1 travels along the reflected light optical axis a'b and is reflected by the first mirror MRR1. Since the optical path of the light after the reflection is the same as that of FIG. 8, the description thereof will be omitted.

FIG. 10 is a diagram schematically illustrating a fourth example of the arrangement positions of the first optical sensor S1, the second optical sensor S2, and the third optical sensor S3 constituting the welding state detection mechanism 40. In FIG. 10, as in FIG. 8, the first optical sensor S1, the second optical sensor S2, and the third optical sensor S3 are all incorporated in the welding head 30. In the description of FIG. 10, the same elements as those in FIG. 9 are denoted by the same reference numerals, the description thereof will be simplified or omitted, and different contents will be described.

Inside the welding head 30 shown in FIG. 10, the collimating lens CLL1, the first mirror MRR1, the condenser lens FCL1, the bend mirror BMRR1, the galvano scanner mechanism GLVU1, the protective glass PTG1, the second mirror MRR2, the condenser lens FCL2, the first optical sensor S1, the third mirror MRR3, the condenser lens FCL3, the second optical sensor S2, the condenser lens FCL4, and the third optical sensor S3 are disposed. A configuration of the welding state detection mechanism 40 shown in FIG. 10 is the same as the configuration of the welding state detection mechanism 40 shown in FIG. 9, and thus the description thereof will be omitted.

The difference between FIG. 10 and FIG. 9 is that a position where the condenser lens FCL1 is disposed is different in FIG. 10. The galvano scanner mechanism GLVU1 receives the light condensed by the condenser lens FCL1, and controls the X-axis mirror XMRR1 and the Y-axis mirror YMRR1 to emit the light incident on the galvano scanner mechanism GLVU1 (specifically, the light reflected by the bend mirror BMRR1) to the welding point of the workpiece W as the incidence beam ICB1.

The collimating lens CLL1, the first mirror MRR1, the condenser lens FCL1, and the bend mirror BMRR1 are disposed on the incidence light optical axis aa'. The galvano scanner mechanism GLVU1 and the protective glass PTG1 are disposed on an incidence light optical axis aʺʺa‴ʺ. The bend mirror BMRR1, the condenser lens FCL1, and the first mirror MRR1 are also disposed on the reflected light optical axis a'b. Since the elements disposed on the reflected light optical axis bb', the reflected light optical axis cc', and the reflected light optical axis dd' are the same as those in FIG. 8, detailed description thereof will be omitted. Therefore, according to the example shown in FIG. 10, the condenser lens FCL1 is disposed in front of an incidence side of the galvano scanner mechanism GLVU1, and the galvano scanner mechanism GLVU1 is adopted, so that the irradiation position of the laser beam on the workpiece W can be freely controlled as in FIG. 9.

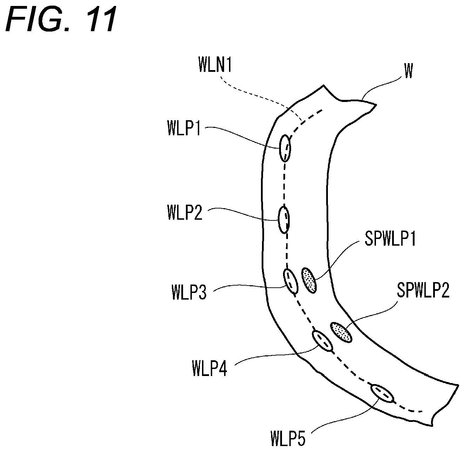

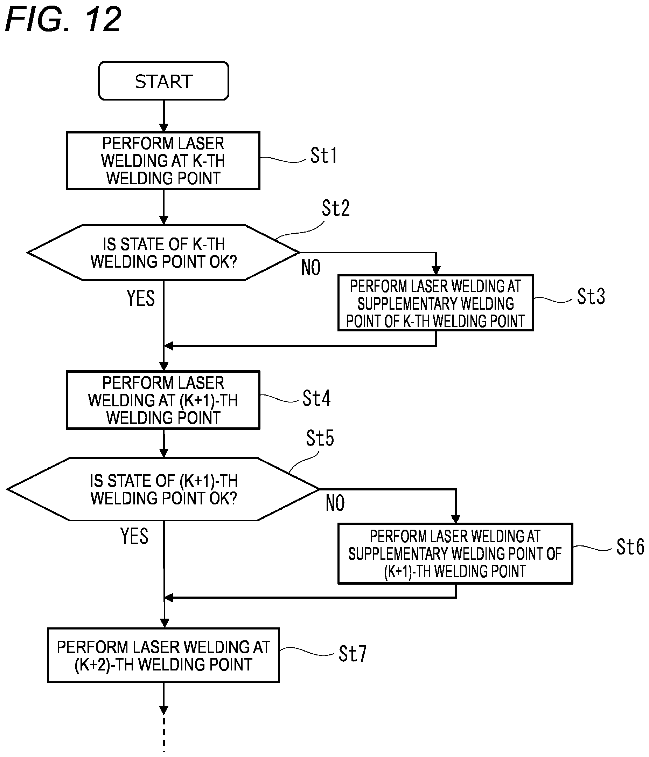

Next, laser welding points, supplementary welding points, and an operation procedure of the laser welding device 100 according to the first embodiment will be described with reference to FIGS. 11 and 12. FIG. 11 is a diagram schematically showing an example of the laser welding points and the supplementary welding points according to the first embodiment. FIG. 12 is a flowchart showing an example of the operation procedure of the laser welding device according to the first embodiment.

In FIG. 11, the laser welding device 100 performs laser welding at each of a plurality of welding points WLP1, WLP2, WLP3, WLP4, and WLP5 along a welding line WLN1 of the workpiece W defined in advance in the laser welding program. In the laser welding program, for example, it is assumed that laser welding is performed in the order of welding points WLP1, WLP2, WLP3, WLP4, and WLP5. In FIG. 11, it is assumed that, for example, the laser welding at three welding points WLP1, WLP2, and WLP5 is normally performed, but occurrence of an abnormality (that is, a welding defect) of laser welding at two welding points WLP3 and WLP4 is detected.

In this case, the laser welding device 100 performs supplementary laser welding (repair welding) at a supplementary welding point SPWLP1 indicating a predetermined position near the welding point WLP3 at which the welding defect occurs. When the repair welding is performed, the laser welding device 100 performs laser welding at the welding point WLP4 that is a next welding point following the welding point WLP3.

However, when occurrence of a welding defect at the welding point WLP4 is also similarly detected, the laser welding device 100 performs supplementary laser welding (repair welding) at a supplementary welding point SPWLP2 indicating a predetermined position near the welding point WLP4 at which the welding defect occurs. When the repair welding is performed, the laser welding device 100 performs laser welding at the welding point WLP5 that is a next welding point following the welding point WLP4.

In FIG. 12, the laser welding device 100 performs laser welding at a K-th welding point (St1). K may be 1 or an integer of 2 or more. The laser welding device 100 determines whether a state of the K-th welding point is OK (that is, an output signal from the welding state detection mechanism 40 indicates that there is no welding defect) (St2). The determination may be performed by, for example, the control unit 71 of the controller 70, and the same applies hereinafter.

When it is determined that the state of the K-th welding point is not OK (St2, NO), the laser welding device 100 performs supplementary laser welding at a predetermined position (supplementary welding point) near the K-th welding point (St3). After step St3 or when it is determined that the state of the K-th welding point is OK (St2, YES), the laser welding device 100 performs laser welding at a (K+1)-th welding point (St4). The laser welding device 100 determines whether a state of the (K+1)-th welding point is OK (that is, an output signal from the welding state detection mechanism 40 indicates that there is no welding defect) (St5).

When it is determined that the state of the (K+1)-th welding point is not OK (St5, NO), the laser welding device 100 performs supplementary laser welding at a predetermined position (supplementary welding point) near the (K+1)-th welding point (St6). After step St6 or when it is determined that the state of the (K+1)-th welding point is OK (St5, YES), the laser welding device 100 performs laser welding on a (K+2)-th welding point (St7). The processing from step St7 onward is similarly repeated, for example, with the processing from step St2 to step St3 as one set, for each set until the laser welding on all of the welding points is completed.

The welding method of the supplementary welding point (step St3) in the case where the welding defect occurs (NO in step St2) has been described above. It is needless to say that in design, for a welding point that does not require a supplementary welding point, a determination of YES may be made in step St2, and the subsequent welding may be performed.

As described above, the laser welding device 100 according to the first embodiment includes the laser oscillator 80 to which the incidence end of the fiber is connected; the welding head 30 that is connected to the emission end of the fiber and performs laser welding while condensing the laser light LB emitted from the laser oscillator 80 via the emission end and irradiating the workpiece W with the condensed laser light LB; the detection unit that detects the presence or absence of a defect in the laser welding; and the controller 70 that controls the operations of the laser oscillator 80 and the welding head 30 based on the output signal of the detection unit. When receiving, from the detection unit, an output signal indicating a defect at the welding point on the workpiece W during the laser welding of the workpiece W, the controller 70 performs control such that supplementary laser welding is performed at a predetermined position in the vicinity of the welding point.

Accordingly, even when a welding defect at the welding point in the laser welding is detected, the laser welding device 100 can quickly and appropriately maintain a welding strength of a welding portion at which the welding defect is detected. For example, as compared with a case where after all of the welding points (for example, the welding points WLP1 to WLP5) prepared on the workpiece W are laser-welded, and the presence or absence of a welding defect is individually detected, the supplementary laser welding or welding based on other methods is performed only at a portion at which the welding defect is present, when the supplementary laser welding is immediately performed near the welding point at which the welding defect is detected, not only the entire tact time is reduced, but also the quality of the laser welding can be improved. In the first embodiment, the supplementary laser welding may be performed only on a portion at which a welding defect is present after all of the welding points (for example, the welding points WLP1 to WLP5) prepared on the workpiece W are laser-welded, and the presence or absence of a welding defect is individually detected.

Further, the controller 70 performs control such that after the supplementary laser welding is performed, laser welding is performed at a second welding point (for example, the welding point WLP4) indicating a next welding point following the welding point (for example, the welding point WLP3) at which the welding defect is detected. As a result, since the laser welding device 100 can perform laser welding continuously after the repair welding for supplementing the welding point at which the welding defect is detected, the tact time of the laser welding on the workpiece W can be reduced.

The detection unit includes a plurality of different sensors, and outputs the output signal indicating that there is a defect in the laser welding when a signal indicating an abnormality is received from at least one sensor. As a result, the laser welding device 100 can comprehensively detect the presence or absence of a welding defect at a welding point by the plurality of sensors.

Further, the detection unit includes the first optical sensor S1 that receives specific wavelength light (for example, the reflected light L1) generated by the laser welding from the welding point and detects the presence or absence of an abnormality based on the intensity of the reflected light L1, the second optical sensor S2 that receives the plasma emission light L2 generated by the laser welding from the welding point and detects the presence or absence of an abnormality based on the intensity of the plasma emission light L2, and the third optical sensor S3 that receives the near-infrared light L3 generated by the laser welding from the welding point and detects the presence or absence of an abnormality based on the intensity of the near-infrared light L3. Accordingly, the laser welding device 100 can appropriately and accurately detect the presence or absence of a welding defect at a welding point in view of characteristics of the light having various wavelength bands and generated during the laser welding.

Further, the first optical sensor S1 receives the reflected light L1 from the welding point as the specific wavelength light. The second optical sensor S2 receives light having a wavelength of 400 nm to 800 nm in the plasma emission light. The third optical sensor S3 receives light having a wavelength of 800 nm to 2000 nm in the near-infrared light. Accordingly, the laser welding device 100 can appropriately and accurately detect the presence or absence of a welding defect at the welding point in view of the characteristic of light that is easily received by each sensor (that is, the first optical sensor S1, the second optical sensor S2, and the third optical sensor S3).

Each of the plurality of different sensors are disposed in the vicinity of the welding head 30. Accordingly, not only the attachment of the plurality of different sensors to the welding head 30 can be simplified, but also the presence or absence of a welding defect at the welding point in the laser welding can be easily detected because the plurality of different sensor moves together with the welding head 30.

Further, each of the plurality of different sensors is disposed in the welding head 30 coaxially with the emission direction of the laser light to the workpiece W. Accordingly, since the plurality of different sensors can be incorporated in the welding head 30, an increase in size of the entire laser welding device 100 can be avoided, and since each of the sensors can be disposed coaxially with the emission direction of the laser light LB to the workpiece W, the presence or absence of a welding defect at the welding point in the laser welding can be detected with high accuracy.

The plurality of different sensors are disposed inside the welding head 30, and the welding head 30 incorporates the galvano scanner mechanism GLVU1 that emits the laser light LB to the welding point of the workpiece W. Accordingly, by adopting the galvano scanner mechanism GLVU1 inside the welding head 30, the irradiation position of the laser light LB (in other words, laser beam) on the workpiece W can be freely controlled, and the presence or absence of a welding defect at the welding point in the laser welding can be detected with high accuracy.

Although various embodiments are described above with reference to the drawings, it is needless to say that the present disclosure is not limited to such examples. It will be apparent to those skilled in the art that various alterations, modifications, substitutions, additions, deletions, and equivalents can be conceived within the scope of the claims, and it should be understood that such changes also belong to the technical scope of the present disclosure.

### INDUSTRIAL APPLICABILITY

The present disclosure is useful as a laser welding device and a laser welding method in which, when an unacceptable welding defect is detected during laser welding, measures for quickly and appropriately maintaining a welding strength of a welding portion at which the welding defect is detected are taken.

### REFERENCE SIGNS LIST

30: welding head
40: welding state detection mechanism
60: manipulator
70: controller
71: control unit
72: storage unit
73: display unit
80: laser oscillator
90: optical fiber
100: laser welding device
LB: laser light
S1: first optical sensor
S2: second optical sensor
S3: third optical sensor
W: workpiece

## Claims

1. A laser welding device comprising:
a laser oscillator to which an incidence end of a fiber is connected;
a welding head connected to an emission end of the fiber and configured to perform laser welding while condensing laser light emitted from the laser oscillator via the emission end and irradiating a workpiece with the laser light;
a detection unit configured to detect presence or absence of a defect in the laser welding; and
a controller configured to control operations of the laser oscillator and the welding head based on an output signal of the detection unit,
the laser welding device being **characterised in that**
when receiving, from the detection unit, an output signal indicating a defect at a first welding
point on the workpiece during the laser welding of the workpiece, the controller performs control such that a supplementary laser welding point is performed at a predetermined
position in a vicinity of the first welding point.

2. The laser welding device according to claim 1,
wherein the controller performs control such that after the supplementary laser welding point
is performed, laser welding is performed at a second welding point indicating a next welding point following the first welding point.

3. The laser welding device according to claim 1,
wherein the detection unit comprises a plurality of different sensors, the detection unit being configured to output an output signal indicating that there is a defect in the laser welding when a signal indicating an abnormality is received from at least one of the sensors.

4. The laser welding device according to claim 3,
wherein the detection unit comprises:
a first optical sensor configured to receive specific wavelength light from the welding point generated by the laser welding and detect the presence or absence of the abnormality based on an intensity of the specific wavelength light;
a second optical sensor configured to receive plasma emission light from the welding point generated by the laser welding and detect the presence or absence of the abnormality based on an intensity of the plasma emission light; and
a third optical sensor configured to receive near-infrared light from the welding point generated by the laser welding and detect the presence or absence of the abnormality based on an intensity of the near-infrared light.

5. The laser welding device according to claim 4,
wherein the first optical sensor receives reflected light from the welding point as the specific wavelength light,
wherein the second optical sensor receives light having a wavelength of 400 nm to 800 nm among the plasma emission light, and
wherein the third optical sensor receives light having a wavelength of 800 nm to 2000 nm among the near-infrared light.

6. The laser welding device according to claim 3,
wherein each of the plurality of different sensors are disposed in the vicinity of the welding head.

7. The laser welding device according to claim 3,
wherein each of the plurality of different sensors is disposed in the welding head coaxially with an emission direction of the laser light to the workpiece.

8. The laser welding device according to claim 3,
wherein each of the plurality of different sensors is disposed in the welding head, and
wherein the welding head comprises a galvano scanner mechanism configured to emit the laser light to the welding point of the workpiece.

9. A laser welding method comprising:
a step of performing laser welding while condensing laser light emitted from a laser oscillator, to which an incidence end of a fiber is connected, via an emission end of the fiber and irradiating a workpiece with the condensed laser light;
a step of detecting presence or absence of a defect in the laser welding;
a step of controlling operations of the laser oscillator and a welding head based on an output signal of a detection unit configured to detect the presence or absence of a defect in the laser welding;
the method being **characterised by**:
a step of executing, when receiving an output signal indicating a defect at a welding point on the workpiece during the laser welding of the workpiece, supplementary laser welding at a predetermined position in a vicinity of the welding point.

## Patentansprüche

1. Laserschweißvorrichtung, umfassend:
einen Laseroszillator, mit dem ein Einfallsende einer Faser verbunden ist;
einen Schweißkopf, der mit einem Emissionsende der Faser verbunden ist und dazu ausgestaltet ist, Laserschweißen bei gleichzeitigem Kondensieren von Laserlicht, das von dem Laseroszillator über das Emissionsende emittiert wird, und Bestrahlen eines Werkstücks mit dem Laserlicht durchzuführen;
eine Detektionseinheit, die dazu ausgestaltet ist, Vorhandensein oder Nichtvorhandensein eines Defekts in dem Laserschweißen zu detektieren; und
eine Steuereinrichtung, die dazu ausgestaltet ist, Arbeitsvorgänge des Laseroszillators und des Schweißkopfs basierend auf einem Ausgabesignal der Detektionseinheit zu steuern,
wobei die Laserschweißvorrichtung **dadurch gekennzeichnet ist, dass**
beim Empfangen eines Ausgabesignals, das einen Defekt an einer ersten Schweißstelle auf dem Werkstück angibt, von der Detektionseinheit während des Laserschweißens des Werkstücks die Steuereinrichtung Steuerung derart durchführt, dass eine zusätzliche Laserschweißstelle an einer vorbestimmten Position in einer Nachbarschaft der ersten Schweißstelle durchgeführt wird.

2. Laserschweißvorrichtung nach Anspruch 1,
wobei die Steuereinrichtung Steuerung derart durchführt, dass, nachdem die zusätzliche Laserschweißstelle durchgeführt wurde, Laserschweißen an einer zweiten Schweißstelle durchgeführt wird, die eine nächste Schweißstelle angibt, die auf die erste Schweißstelle folgt.

3. Laserschweißvorrichtung nach Anspruch 1,
wobei die Detektionseinheit eine Vielzahl von verschiedenen Sensoren umfasst, wobei die Detektionseinheit dazu ausgestaltet ist, ein Ausgabesignal auszugeben, das angibt, dass ein Defekt in dem Laserschweißen vorliegt, wenn ein Signal, das eine Anomalie angibt, von mindestens einem der Sensoren empfangen wird.

4. Laserschweißvorrichtung nach Anspruch 3,
wobei die Detektionseinheit umfasst:
einen ersten optischen Sensor, der dazu ausgestaltet ist, Licht mit spezifischer Wellenlänge von der Schweißstelle zu empfangen, die von dem Laserschweißen erzeugt wird, und das Vorhandensein oder Nichtvorhandensein der Anomalie basierend auf einer Stärke der spezifischen Wellenlänge zu detektieren;
einen zweiten optischen Sensor, der dazu ausgestaltet ist, Plasmaemissionslicht von der Schweißstelle zu empfangen, die von dem Laserschweißen erzeugt wird, und das Vorhandensein oder Nichtvorhandensein der Anomalie basierend auf einer Stärke des Plasmaemissionslichts zu detektieren; und
einen dritten optischen Sensor, der dazu ausgestaltet ist, Nahinfrarotlicht von der Schweißstelle zu empfangen, die von dem Laserschweißen erzeugt wird, und das Vorhandensein oder Nichtvorhandensein der Anomalie basierend auf einer Stärke des Nahinfrarotlichts zu detektieren.

5. Laserschweißvorrichtung nach Anspruch 4,
wobei der erste optische Sensor reflektiertes Licht von der Schweißstelle als das Licht mit der spezifischen Wellenlänge empfängt,
wobei der zweite optische Sensor Licht, das eine Wellenlänge von 400 nm bis 800 nm unter dem Plasmaemissionslicht aufweist, empfängt, und
wobei der dritte optische Sensor Licht, das eine Wellenlänge von 800 nm bis 2000 nm unter dem Nahinfrarotlicht aufweist, empfängt.

6. Laserschweißvorrichtung nach Anspruch 3,
wobei jeder der Vielzahl von verschiedenen Sensoren in der Nachbarschaft des Schweißkopfs angeordnet ist.

7. Laserschweißvorrichtung nach Anspruch 3,
wobei jeder der Vielzahl von verschiedenen Sensoren in dem Schweißkopf koaxial mit einer Emissionsrichtung des Laserlichts zu dem Werkstück angeordnet ist.

8. Laserschweißvorrichtung nach Anspruch 3,
wobei jeder der Vielzahl von verschiedenen Sensoren in dem Schweißkopf angeordnet ist, und
wobei der Schweißkopf einen Galvo-Scanner-Mechanismus umfasst, der dazu ausgestaltet ist, das Laserlicht zur Schweißstelle des Werkstücks zu emittieren.

9. Laserschweißverfahren, umfassend:
einen Schritt des Durchführens von Laserschweißen bei gleichzeitigem Kondensieren von Laserlicht, das von einem Laseroszillator, mit dem ein Einfallsende einer Faser verbunden ist, über ein Emissionsende der Faser emittiert wird, und Bestrahlen eines Werkstücks mit dem kondensierten Laserlicht;
einen Schritt des Detektierens von Vorhandensein oder Nichtvorhandensein eines Defekts in dem Laserschweißen;
einen Schritt des Steuerns von Arbeitsvorgängen des Laseroszillators und eines Schweißkopfs basierend auf einem Ausgabesignal einer Detektionseinheit, die dazu ausgestaltet ist, das Vorhandensein oder Nichtvorhandensein eines Defekts in dem Laserschweißen zu detektieren;
wobei das Verfahren **gekennzeichnet ist durch**:
einen Schritt des Ausführens, beim Empfangen eines Ausgabesignals, das einen Defekt an einer Schweißstelle auf dem Werkstück während des Laserschweißens des Werkstücks angibt, von zusätzlichem Laserschweißen an einer vorbestimmten Position in einer Nachbarschaft der Schweißstelle.

## Revendications

1. Dispositif de soudage au laser comprenant :
un oscillateur laser auquel est connectée une extrémité d'incidence d'une fibre ;
une tête de soudage connectée à une extrémité d'émission de la fibre et configurée pour réaliser un soudage au laser tout en condensant une lumière laser émise par l'oscillateur laser via l'extrémité d'émission et en irradiant une pièce à travailler avec la lumière laser ;
une unité de détection configurée pour détecter la présence ou l'absence d'un défaut dans le soudage au laser ; et
un dispositif de commande configuré pour commander les opérations de l'oscillateur laser et de la tête de soudage sur la base d'un signal de sortie de l'unité détection,
le dispositif de soudage au laser étant **caractérisé en ce que**
lors de la réception, de l'unité détection, d'un signal de sortie indiquant un défaut à un premier point de soudage sur la pièce à travailler pendant le soudage au laser de la pièce à travailler, le dispositif de commande réalise une commande de sorte qu'un point de soudage au laser supplémentaire soit réalisé à une position prédéterminée à proximité du premier point de soudage.

2. Dispositif de soudage au laser selon la revendication 1,
dans lequel le dispositif de commande réalise une commande de sorte qu'après la réalisation du point de soudage au laser supplémentaire, un soudage au laser soit réalisé à une deuxième point de soudage indiquant un prochain point de soudage suivant le premier point de soudage.

3. Dispositif de soudage au laser selon la revendication 1,
dans lequel l'unité détection comprend une pluralité de capteurs différents, l'unité détection étant configurée pour délivrer un signal de sortie indiquant qu'il y a un défaut dans le soudage au laser lorsqu'un signal indiquant une anomalie est reçu d'au moins un des capteurs.

4. Dispositif de soudage au laser selon la revendication 3,
dans lequel l'unité détection comprend :
un premier capteur optique configurée pour recevoir une lumière de longueur d'onde spécifique du point de soudage générée par le soudage au laser, et détecter la présence ou l'absence de l'anomalie sur la base d'une intensité de la lumière de longueur d'onde spécifique ;
un deuxième capteur optique configurée pour recevoir une lumière d'émission de plasma du point de soudage générée par le soudage au laser, et détecter la présence ou l'absence de l'anomalie sur la base d'une intensité de la lumière d'émission de plasma ; et
un troisième capteur optique configurée pour recevoir une lumière infrarouge proche du point de soudage générée par le soudage au laser, et détecter la présence ou l'absence de l'anomalie sur la base d'une intensité de la lumière infrarouge proche.

5. Dispositif de soudage au laser selon la revendication 4,
dans lequel le premier capteur optique reçoit une lumière réfléchie par le point de soudage en tant que lumière de longueur d'onde spécifique,
dans lequel le deuxième capteur optique reçoit une lumière ayant une longueur d'onde de 400 nm à 800 nm dans la lumière d'émission de plasma, et
dans lequel le troisième capteur optique reçoit une lumière ayant une longueur d'onde de 800 nm à 2000 nm dans la lumière infrarouge proche.

6. Dispositif de soudage au laser selon la revendication 3,
dans lequel chacun de la pluralité de capteurs différents est disposé à proximité de la tête de soudage.

7. Dispositif de soudage au laser selon la revendication 3,
dans lequel chacun de la pluralité de capteurs différents est disposé dans la tête de soudage sur le même axe qu'une direction d'émission de la lumière laser vers la pièce à travailler.

8. Dispositif de soudage au laser selon la revendication 3,
dans lequel chacun de la pluralité de capteurs différents est disposé dans la tête de soudage, et dans lequel la tête de soudage comprend un mécanisme de balayage Galvano configuré pour émettre la lumière laser vers le point de soudage de la pièce à travailler.

9. Procédé de soudage au laser comprenant :
une étape de réalisation d'un soudage au laser tout en condensant une lumière laser émise par un oscillateur laser auquel est connectée une extrémité d'incidence d'une fibre, via une extrémité d'émission de la fibre, et en irradiant une pièce à travailler avec la lumière laser condensée ;
une étape de détection de la présence ou de l'absence d'un défaut dans le soudage au laser ;
une étape de commande des opérations de l'oscillateur laser et d'une tête de soudage sur la base d'un signal de sortie d'une unité de détection configurée pour détecter la présence ou l'absence d'un défaut dans le soudage au laser ;
le procédé étant **caractérisé par** :
une étape d'exécution, lors de la réception d'un signal de sortie indiquant un défaut à un point de soudage sur la pièce à travailler pendant le soudage au laser de la pièce à travailler, d'un soudage au laser supplémentaire à une position prédéterminée à proximité du point de soudage.
